# EUROPEAN PATENT SPECIFICATION

(11) **EP 2 235 403 B1**
(45) Date of publication and mention of the grant of the patent: **29.08.2012**
(21) Application number: 09725145.8
(22) Date of filing: 27.03.2009
(51) Int. Cl.: F16H 61/32, F16H 57/029

(54) **VEHICLE RANGE CHANGE APPARATUS**
VORRICHTUNG ZUR ÄNDERUNG EINES FAHRZEUGBEREICHS
APPAREIL DE CHANGEMENT DE GAMME DE VEHICULE

(30) Priority: 28.03.2008 JP 2008088307
(43) Date of publication of application: 06.10.2010
(73) Proprietor: Aisin AW Co., Ltd., Fuji-cho Anjo-shi Aichi 444-1192 (JP); Aisin Seiki Kabushiki Kaisha, Kariya-shi, Aichi 448-8650 (JP)
(72) Inventor: TANAKA, Michimasa, Anjo-shi Aichi 444-1192 (JP); TAKEI, Tadamasa, Kariya-shi Aichi 448-8605 (JP); HAZAMA, Shinichiro, Kariya-shi Aichi 448-8650 (JP)
(74) Representative: TBK
(86) International application number: PCT/JP2009/001409
(87) International publication number: WO 2009/119115

(56) References cited:
- JP-A- 7 299 539
- JP-A- 2003 139 231
- JP-A- 2003 254 434
- JP-A- 2003 309 380
- JP-A- 2005 207 570
- JP-U- 3 081 454

## Description

The present invention relates to a vehicle range change apparatus forming a so-called shift-by-wire system that sets via an electric signal a shift range (for example, P, R, N, or D) selected with, for example, a shift lever by a driver.

Typically, the shift range of a vehicle having, for example, an automatic transmission is changed by rotatably driving a manual valve that sets a range pressure in a hydraulic control unit or a manual shaft that is operatively connected to a parking mechanism. Predominantly, the manual shaft is driven through, for example, a mechanical rod mechanism by a shift lever disposed near a driver's seat.

With the recent enhanced freedom of design of vehicles and appearance of hybrid vehicles, however, new models have lately been developed that use the so-called shift-by-wire (SBW) system that drivingly controls the manual shaft electrically using an electric signal based on a shift lever operation, without mechanically connecting the shift lever with the manual shaft.

A shift-by-wire system has been proposed so as to eliminate the need for significant design changes of, for example, the automatic transmission. The system has a range change apparatus including, for example, a motor. The range change apparatus is mounted on a manual shaft included in the transmission side and the manual shaft is rotatably driven by drivingly controlling the motor based on a shift lever operation (see JP-A-2005-207570, hereinafter referred to as Patent Document 1). In this system, the rotatable drive of the motor is transmitted to the manual shaft via a drive mechanism, while an angle sensor is used to detect the rotation angle of the manual shaft and feedback information is provided for a drive control of the motor to achieve a change of the shift range.

The range change apparatus is assembled separately from the automatic transmission or a hybrid drive system and mounted on the manual shaft that protrudes from a case thereof. Accordingly, in order to ensure waterproofness and prevent entry of foreign matter, the range change apparatus is accommodated in a case such that the motor, the drive mechanism, the angle sensor, and other parts are hermetically sealed. In addition, although the range change apparatus is mounted on the automatic transmission or the hybrid drive system later, even before which, the apparatus is assembled into a substantially completed state and transported with care to prevent entry of, for example, foreign matter.

Any play between the manual shaft and the drive mechanism, on the other hand, poses a problem that the rotatable drive of the motor is not accurately reflected in the manual shaft, even if the motor drive is accurately controlled by detecting the angle of the manual shaft accurately using the angle sensor. As a solution to this, the manual shaft may have its leading end fastened to the drive mechanism (arm member) as shown in FIGS. 5 and 6 of Patent Document 1.

The leading end of the manual shaft and the drive mechanism (arm member) are, however, hermetically sealed and accommodated in the case as described above. To fasten these parts together, therefore, it becomes necessary to remove the case from the completed range change apparatus, fasten the parts together, and then reinstall the case back again. This specifically leads to a more complicated process of mounting on the automatic transmission or the hybrid drive system. In addition, the necessity to remove the case temporarily from the range change apparatus increases the likelihood of entry of foreign matter in the mounting process.
US 2004/0261559 A1 discloses a vehicle range change apparatus having the features of the preamble of claim 1.
Further vehicle range change apparatuses are known from JP 2003 309380 A and JP 2003 254434 A.
It is the object of the present invention to provide a vehicle range change apparatus capable of simplifying the mounting process and preventing entry of foreign matter by allowing an end portion of a range change shaft and a rotary engagement member of a drive mechanism to be fastened together inside a case member with the vehicle range change apparatus in an assembled state.
The object of the invention is achieved by a vehicle range change apparatus having the features of claim 1.
A further advantageous development of the invention is subject-matter of the dependent claim.

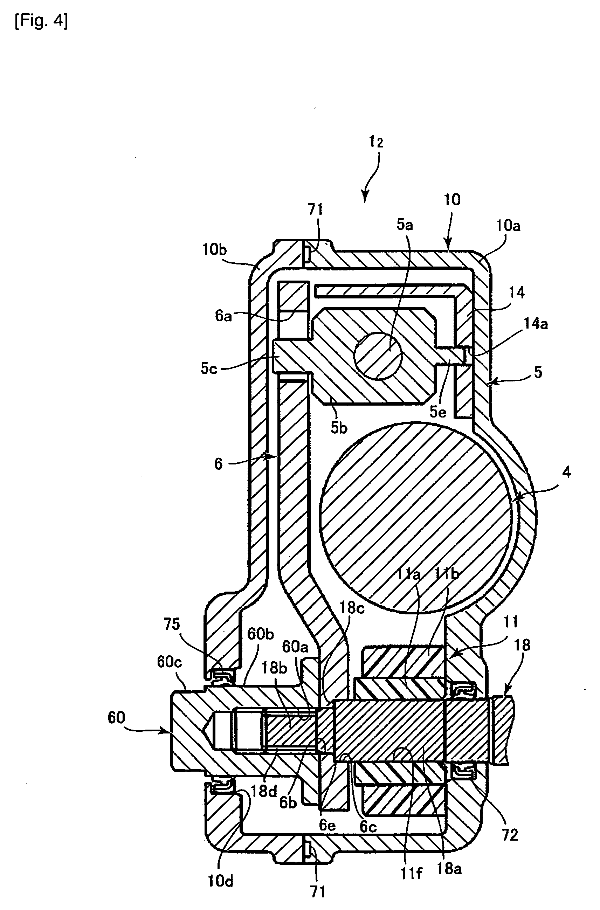

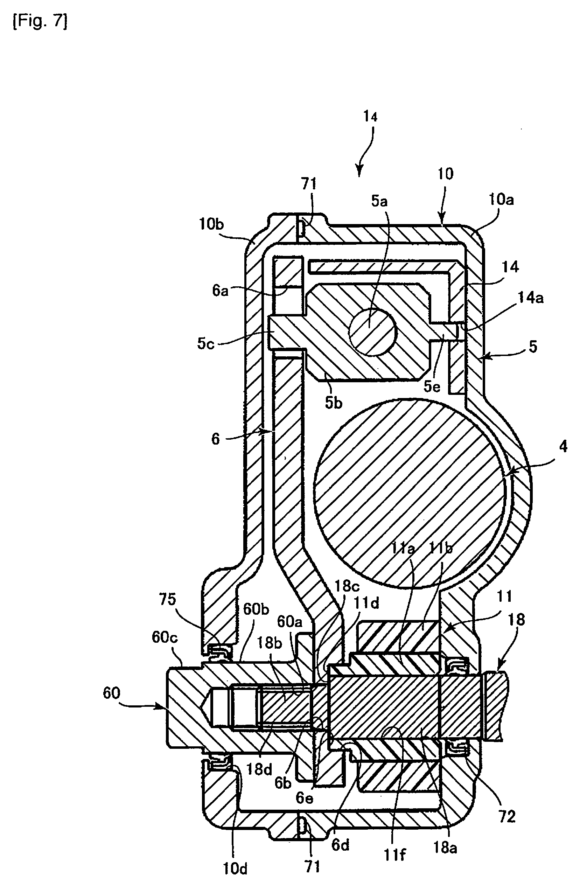

Specifically, the present invention (see, for example, FIGS. 4 and 7) is characterized in that: the fastening enabling unit includes a through hole (10d) formed in the case member (10) and a seal member (75) disposed on a circumference of the through hole (10d); and the fastening unit includes a nut (60) that includes: an outer peripheral cylindrical portion (60b) threadedly engaging the external thread (18d) formed on the end portion (18b) of the range change shaft (18), extending up to the through hole (10d), and sealed at a portion thereof relative to the through hole (10d) by the seal member (75); and a torque receiving portion (60c) receiving rotating torque from a tool at an outside of the case member (10).

As a result, fastening between the range change shaft and the rotary engagement member of the drive mechanism can be made inside the case member by tightening the nut via the torque receiving portion from the outside of the case member. Further, the outer peripheral cylindrical portion and the through hole in the case member are sealed, which achieves good sealing performance of the case member.

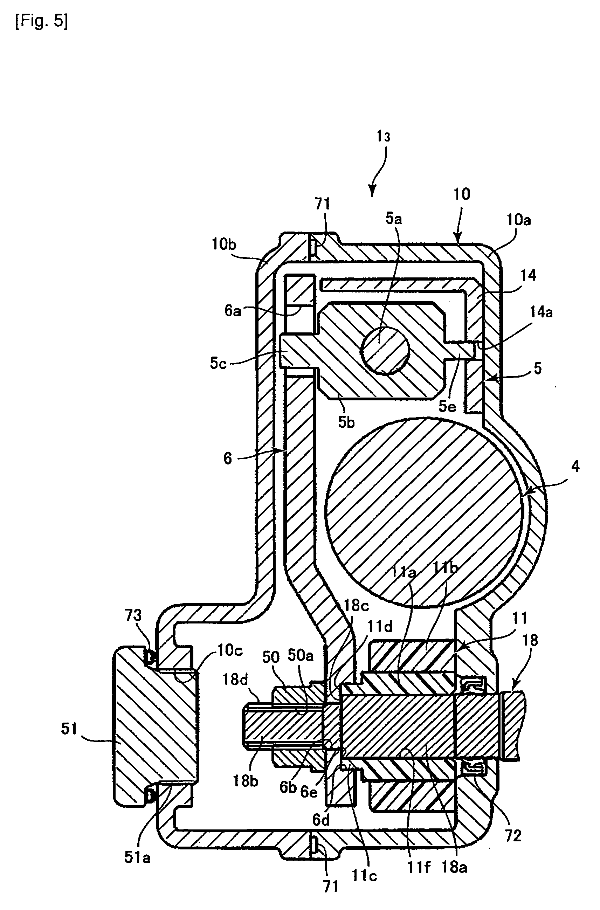

Additionally, the present invention (see, for example, FIGS. 5 to 7) is characterized in that: the detection unit (11) includes a rotor (11a) fitted to the range change shaft (18) and integrally rotatable therewith; and an angle sensor (11b) for detecting a rotation angle of the rotor (11a), and the vehicle range change apparatus includes a fit portion (6d, 11c) in which the rotary engagement member (6) of the drive mechanism and the rotor (11a) are unrotatably fitted.

Accordingly, the fit portion in which the rotary engagement member of the drive mechanism and the rotor of the detection unit are unrotatably fitted can eliminate positional deviation between the rotary engagement member and the rotor of the detection unit. When the vehicle range change apparatus is to be mounted, therefore, the range change shaft can be easily inserted, so that the mounting processes can be further simplified.

Note that the above-referenced numerals shown in parentheses are for keying with the drawings and are given only for convenience of easier understanding of the invention. These numerals do not affect whatsoever the scope of the claims of the invention.

[fig.1]FIG. 1 is a schematic view showing a range change apparatus and mechanisms surrounding the same according to the present invention.
[fig.2]FIG. 2 is a developed view showing the range change apparatus.
[fig.3]FIG. 3 is a cross-sectional view on arrow A-A of FIG. 2, showing a range change apparatus according to a first embodiment not covered by the invention.
[fig.4]FIG. 4 is a cross-sectional view showing a range change apparatus according to a second embodiment being subject-matter of the invention
[fig.5]FIG. 5 is a cross-sectional view showing a range change apparatus according to a third embodiment not covered by the invention.
[fig.6]FIG. 6 is an exploded perspective view showing a fit portion between an arm member and a rotor of a detection sensor.
[fig.7]FIG. 7 is a cross-sectional view showing a range change apparatus according to a fourth embodiment being subject-matter of the invention.
[fig.8]FIG. 8 is a cross-sectional view showing a range change apparatus according to a fifth embodiment not covered by the invention.
[fig.9]FIG. 9 is a perspective view showing a range change apparatus according to the fifth embodiment not covered by the invention.
[fig.10]FIG. 10 is a cross-sectional view showing a range change apparatus according to a sixth embodiment not covered by the invention.
[fig.11]FIG. 11 is a partly cutaway perspective view showing the range change apparatus according to the sixth embodiment.

### First Embodiment

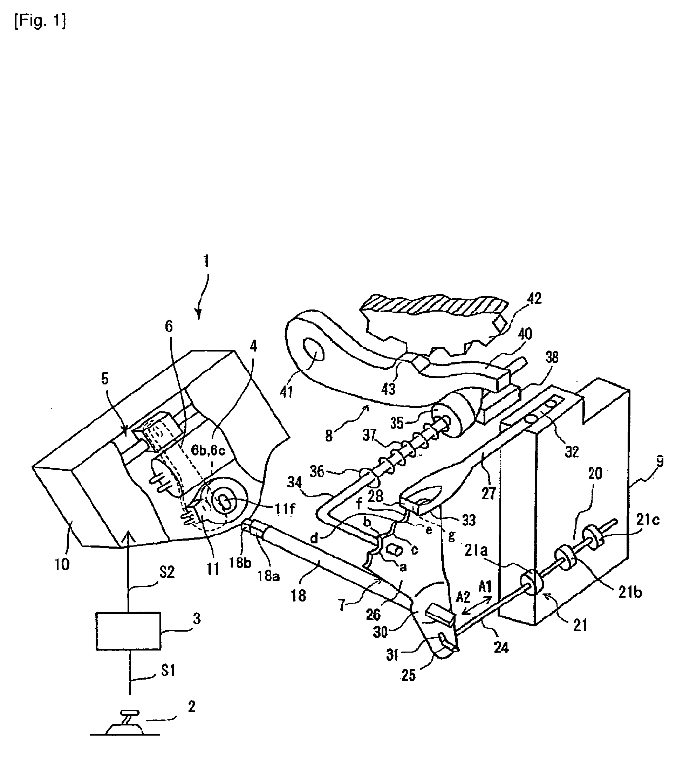

FIG. 1 shows a range change apparatus 1 according to this embodiment as a typical vehicle range change apparatus. The figure schematically shows arrangements of the range change apparatus 1, a detent mechanism 7, a parking mechanism 8, and a valve body 9. First through sixth embodiments will be described as embodiments of the present invention. Note that the range change apparatus 1 will be referred simply as the "range change apparatus 1" when portions commonly found in each of these six embodiments are to be described and as "range change apparatus 1₁ to 1₆" when a specific one is to be described.

Referring to FIG. 1, the range change apparatus 1 is arranged so as to be mounted in an automatic transmission (for example, a multi-stage automatic transmission or a continuously variable transmission (CVT)) mounted in, for example, a vehicle. The range change apparatus 1 includes control means 3, a motor 4, a conversion mechanism (drive mechanism) 5, an arm member (rotary engagement member, drive mechanism) 6, and a range position detection sensor (detection unit) 11. Specifically, the control means 3 generates a control signal S2 based on a shift signal (electric signal) S1 from a shift lever (range selector device) 2 with which a driver selects a shift range. The motor 4 is controlled by the control signal S2 from the control means 3. The conversion mechanism 5 converts rotary motion of the motor 4 into linear motion. The arm member 6 converts the linear motion converted by the conversion mechanism 5 into rocking motion. The range position detection sensor 11 detects the position of a spool 21 of a manual valve 20 to be described later by detecting the rotation angle of a manual shaft (range change shaft) 18 that is rotatably driven by the arm member 6. The motor 4, the conversion mechanism 5, the arm member 6, and the range position detection sensor 11 are accommodated in a single case (case member) 10.

The automatic transmission, on the other hand, roughly includes the hydraulic control unit (valve body) 9 for hydraulically controlling a speed change mechanism (not shown), the parking mechanism 8, and the detent mechanism 7. The detent mechanism 7 and the manual shaft 18 connected thereto are disposed on an outside of a case (not shown) of the automatic transmission. Further, the spool 21 is disposed inside the valve body 9 of the automatic transmission and the parking mechanism 8 is accommodated in the case (not shown) of the automatic transmission.

The shift lever 2 is marked with shift ranges (not shown) of a P (parking) range, an R (reverse) range, an N (neutral) range, and a D (drive) range of the automatic transmission. The driver directly operates the shift lever 2 to select one of the above mentioned shift ranges. The shift signal S 1 corresponding to the selected range is then generated. Note that any range selector device other than the shift lever 2 may be used, as long as such range selector device can reflect the intention of the driver, specifically, can generate a shift signal S1 corresponding to the shift range selected by the driver. For example, a shift button, a shift switch, or a voice input unit may be used.

The control means 3 generates the control signal S2 based on the shift signal S1 generated by the shift lever 2 and uses the control signal S2 to drivingly control rotation of the motor 4 to be described later. Further, the control means 3 receives an input of a detection signal from the range position detection sensor 11 (to be described later) that detects the position of the spool 21 to be described later. Based on the detection signal, the control means 3 drivingly controls the direction and start/stop timing of rotation of the motor 4. As such, the control means 3 changes the shift range by controlling the operation of the spool 21 using the motor 4 based on the shift signal S 1 from the shift lever 2; specifically, the control means 3 is a control unit for controlling a so-called shift-by-wire system (SBW). Further, although FIG. 1 shows that the control means 3 is disposed outside the case 10, the control means 3 may be disposed on an inside of the case 10.

The detent mechanism 7, on the other hand, includes a detent lever 26, a detent spring 27, and a roller 28. The detent lever 26 is a plate-like member having a bearing portion 30 into which the manual shaft 18 is fitted. The detent lever 26 is rockably supported by the case of the automatic transmission (not shown) via the manual shaft 18. The detent lever 26 has one end portion (an end portion on the downward side in FIG. 1) in which an oblong slot 31 is drilled. A hook 25 at a leading end of a connection shaft 24 connected to the spool 21 is engaged in this slot 31.

The spool 21 is a spool of the manual valve 20 disposed inside the valve body 9 and includes lands 21a, 21b, 21c in sequence, for example, from the left in the figure. The spool 21 is supported axially (in the direction of arrows A1-A2) movably. By axially moving, the spool 21 changes an oil path in the valve body 9 to set a predetermined shift range. Specifically, the spool 21 can move to a P position corresponding to the P range, an R position corresponding to the R range, an N position corresponding to the N range, and a D position corresponding to the D range.

A leading end portion (an end portion on the upward side in FIG. 1) of the detent lever 26 includes range grooves a, c, e, g in sequence from the left as four change regions arranged in sequence from the left in the figure. Protrusions b, d, f are formed between each pair of the range grooves a, c, e, g. The range grooves a, c, e, g roughly correspond, in sequence, to the P position, the R position, the N position, and the D position of the above-described spool 21. Note herein that the term "roughly" means that each of the range grooves a, c, e, g has a region with a width (change region). The detent spring 27 is formed from a substantially long plate-like member. As shown in FIG. 1, the detent spring 27 has a proximal end portion 32 fixed to the valve body 9 and a distal end including bifurcated ends 33 formed therein. The roller 28 is rotatably supported between the bifurcated ends 33. The detent spring 27 generally acts as a flat spring, pressing the roller 28 that is rotatably disposed at the distal end thereof against a slope surface of each of the range grooves a, c, e, g of the detent lever 26, so that the detent lever 26 can be positioned and held in position accurately.

As described above, according to this embodiment, the spool 21 is accurately controlled by accurately controlling the rotation angle of the manual shaft 18, instead of directly controlling the position of the spool 21, based on the arrangement in which the rocking motion of the detent lever 26 and the moving motion of the spool 21 in the direction of the arrows A1-A2 are operatively connected with each other; specifically, the rotation position of the manual shaft 18 corresponds one-to-one to the position of the spool 21.

Referring to FIG. 1, the parking mechanism 8 includes a parking rod 34, a wedge 35, a spring 37, a support 38, and a parking pole 40. Specifically, the parking rod 34 has a proximal end side that is bent into an L-shape and engaged with the above-described detent lever 26. The wedge 35 with a conical shape is loose-fitted in a distal end side of the parking rod 34 and is movable. The spring 37 is connected to a flange portion 36 fixed to the parking rod 34 and to the wedge 35. The support 38 is disposed downwardly of the distal end side of the parking rod 34. The parking pole 40 is rockable and the wedge 35 is inserted between the support 38 and the parking pole 40. The parking pole 40 is disposed so as to be substantially vertically rockable about an axis 41 on a proximal end side thereof. The parking pole 40 has a pawl 43 disposed on an upper side thereof in a protruding condition. The pawl 43 is engageable with a parking gear 42 fixed to an output shaft (not shown) of the automatic transmission.

Shift range change operations will next be briefly described using the change from the P range to the R range as an example. In the P range, the roller 28 of the detent mechanism 7 is disposed in the range groove a shown in FIG. 1. When the driver changes the shift lever 2 from the P range to the R range, the shift signal S 1 corresponding to this is input to the control means 3. This causes the control means 3 to energize the motor 4 of the range change apparatus 1 to be described in detail later, so that the detent lever 26 rotates in the counterclockwise direction in FIG. 1 via the manual shaft 18 and the spool 21 moves in the direction of the arrow A 1. When the angle detected by the range position detection sensor 11 to be described later becomes a value corresponding to the change from the P range to the R range, the control means 3 stops the rotation of the motor 4. This causes the roller 28 to move out of the range groove a, ride over the protrusion b, and enter the range groove c. With the motor 4 deenergized, the detent lever 26 is rotated by an urging force of the roller 28 based on an elastic force of the detent spring 27. Through this rotation, the roller 28 is accurately positioned and held in position in the range groove c. This results in the spool 21 that has been disposed at the P position being accurately disposed at the R position. Other shift range change operations are substantially the same as above and description for the same will be omitted.

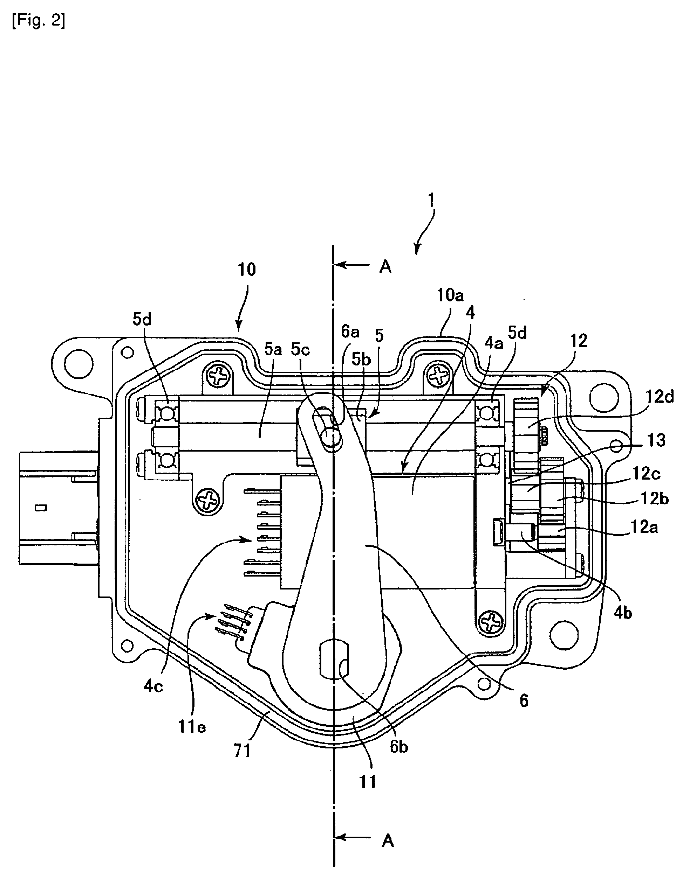

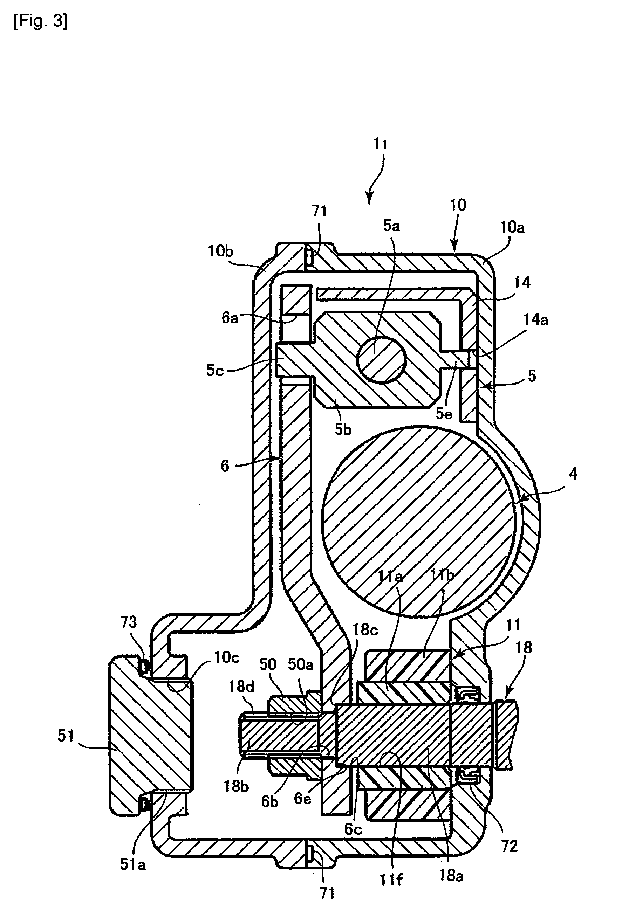

Referring to FIGS. 2 and 3, arrangements of the range change apparatus 1 will next be described. The case 10 includes a case main body 10a and a cover 10b. The case main body 10a is fixed to the automatic transmission. The cover 10b (see FIG. 3) covers the case main body 10a from an upward direction. FIG. 2 shows a condition in which the cover 10b is removed. FIG. 3 is a cross-sectional view taken along line A-A of FIG. 2.

Referring to FIG. 2, the motor 4 includes a cylindrical main body 4a, an output shaft 4b, and a motor terminal portion 4c. The output shaft 4b is disposed at one end side of the main body 4a in a protruding condition. The motor terminal portion 4c is disposed at the other end side of the main body 4a. Power is supplied to, and the control signal S2 from the control means 3 is input to, the motor terminal portion 4c. In addition, a DC motor having a permanent magnet, for example, is used as the motor 4 and the control means 3 controls the direction, time, and timing of rotation of the motor 4.

A transmission gear 12a is fixed to the output shaft 4b of the motor 4 so as to be integrally rotatable therewith. The transmission gear 12a meshes with a transmission gear 12b. The transmission gear 12b is fitted to a transmission shaft 13 that is fixed to the case 10 so as to be rotatable thereabout and has a larger outside diameter than the transmission gear 12a. Further, a transmission gear 12c having a smaller outside diameter than the transmission gear 12b is integrally fixed to the transmission gear 12b. The transmission gear 12c meshes with a transmission gear 12d having a larger outside diameter than the transmission gear 12c. The transmission gear 12d is fixed to a screw shaft 5a of the conversion mechanism 5 to be described later so as to be rotatable integrally therewith. Consequently, rotation of the output shaft 4b of the motor 4 undergoes speed reduction by a transmission gear train (drive mechanism) 12 including these transmission gears 12a, 12b, 12c, 12d before being transmitted to the screw shaft 5a.

The conversion mechanism 5 incorporates a slide screw according to this embodiment. The slide screw as the conversion mechanism 5 includes, as shown in FIG. 2, the screw shaft 5a and a nut member 5b. Specifically, the screw shaft 5a is rotatably driven by the motor 4. The nut member 5b is engaged axially movably with the screw shaft 5a. The screw shaft 5a is rotatably supported by the case 10 via a bearing 5d fixed by a bracket relative to the case 10.

Referring to FIG. 3, the nut member 5b is formed substantially into a rectangular parallelepiped including a guide rail 5e formed along an axial direction on a back surface side (right side in FIG. 3). The guide rail 5e is loose-fitted in a guide groove 14a of a guide member 14 that is fixedly disposed on the inside of the case main body 10a and placed in parallel with the screw shaft 5a. The nut member 5b is guided axially so as to be incapable of rotation as the screw shaft 5a rotates. In addition, the nut member 5b includes a protrusion 5c formed at the front side thereof (left side in FIG. 3). The arm member 6 to be described later is engaged with the protrusion 5c. As such, in this embodiment, the conversion mechanism 5 is structured so as to be capable of converting rotary motion into linear motion (linear drive).

The arm member 6 includes a slot-like opening 6a formed at one end thereof. The protrusion 5c of the nut member 5b is engaged in the opening 6a. Further, the arm member 6 includes through holes 6b, 6c formed at the other end thereof as shown in FIG. 3. The manual shaft 18 has a leading end portion fitted relatively unrotatably into the through holes 6b, 6c.

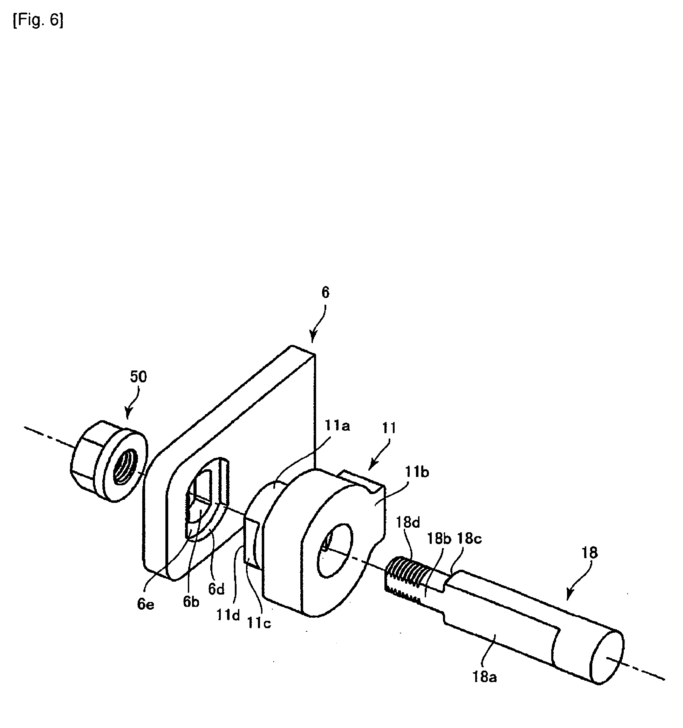

Specifically, the manual shaft 18 includes a two-chamfered-face portion 18a and a taper portion (end portion) 18b. The two-chamfered-face portion 18a has two chamfered faces, each extending in parallel with each other, formed at the leading end portion of the manual shaft 18. The taper portion 18b is formed to be thinner than the two-chamfered-face portion 18a. The difference in diameter between these two portions results in a step portion 18c being formed. In addition, an external thread 18d is formed on an outer peripheral side of the taper portion 18b excluding the two chamfered faces (see FIGS. 1 and 6).

The through hole 6c has a larger diameter than the through hole 6b so as to match the profile of the manual shaft 18. The difference in diameter between these through holes results in an abutment portion 6e being formed in the arm member 6. Specifically, when the manual shaft 18 is inserted into the through holes 6b, 6c, the two-chamfered-face portion 18a fits into the through hole 6c, the taper portion 18b fits into the through hole 6b, and the step portion 18c abuts on the abutment portion 6e. When an internal thread 50a of a nut (fastening unit) 50 is then threadably tightened onto the external thread 18d of the taper portion 18b, the arm member 6 and the manual shaft 18 are fastened together such that the abutment portion 6e is clamped between the step portion 18c of the manual shaft 18 and the nut 50.

As a result, the arm member 6 is rotated to rotate the manual shaft 18 as the nut member 5b moves axially along the screw shaft 5a. Note that a seal ring 72 is disposed between the manual shaft 18 and the main body 10a of the case 10. Coupled with a seal member 71 disposed between the main body 10a and the cover 10b in the case 10, the seal ring 72 constitutes a hermetically sealed structure for the case 10, thus preventing entry of foreign matter and achieving waterproofness.

The range position detection sensor 11 is formed from a potentiometer disposed so as to surround the manual shaft 18 disposed penetratingly. Referring to FIGS. 2 and 3, the range position detection sensor 11 includes a rotor 11a and an angle sensor 11b. The rotor 11a has a permanent magnet mounted internally therein. The angle sensor 11b rotatably supports the rotor 11a and has a hall element mounted internally therein. The angle sensor 11b detects the angle of the rotor 11a. The rotor 11a includes a through hole 11f formed so as to match the profile of the two-chamfered-face portion 18a of the manual shaft 18 at a substantially center position thereof. The through hole 11f is formed from, for example, a resin material that is formed to be slightly smaller in size than the two-chamfered-face portion 18a. When the manual shaft 18 is inserted, the two-chamfered-face portion 18a is press-fitted into the through hole 11f. This results in the rotor 11a being fitted into an outer peripheral portion of the manual shaft 18, disposed unrotatably relative to the manual shaft 18. The range position detection sensor 11 then accurately detects the rotation angle of the manual shaft 18 without allowing, for example, play to intervene.

The range position detection sensor 11 includes a sensor terminal portion 11e for outputting voltage corresponding to the rotation angle of the manual shaft 18. Specifically, the sensor terminal portion 11e outputs a signal indicative of the angle of the manual shaft 18 to the control means 3. The control means 3 uses this angle signal for feedback control of the amount of driving rotation of the motor 4. Specifically, drive/stop of the motor 4 is controlled according to the detection result of the angle of the manual shaft 18 by the range position detection sensor 11. Since the arm member 6 and the manual shaft 18 are fastened together as described above, the drive/stop of the motor 4 is controlled without involving, for example, the manual shaft being driven via play; specifically, the range change is controlled accurately. Note that the embodiment has been described for the arrangement in which the range position detection sensor 11 is formed of a potentiometer. However, the arrangement is not limited to this and any type of sensor may be used as long as such a sensor can output an electric signal corresponding to the rotation angle of the manual shaft 18.

Referring to FIG. 3, in the range change apparatus 1₁ described heretofore, the cover 10b of the case 10 includes an insertion hole (fastening enabling unit) 10c formed at a position on an extension extended coaxially from the manual shaft 18. A tool for tightening the nut 50 (for example, hexagonal wrench) can be inserted into the insertion hole 10c. A lid member (covering member, fastening enabling unit) 51, to which a seal ring 73 is fixed, is disposed at the insertion hole 10c so as to removably cover the insertion hole 10c. Specifically, the insertion hole 10c has internal threads formed therein, while the lid member 51 has external threads (external thread portion) formed thereon. The lid member 51 is threaded into the insertion hole 10c. In addition, when the lid member 51 is mounted on the case 10, the seal ring 73 hermetically seals a portion between the case 10 and the lid member 51. Note that the seal ring may be separate from the lid member and embedded into a groove that may be formed in the case.

Accordingly, in this first embodiment, when the range change apparatus 1₁ is to be mounted on the manual shaft 18 disposed in the automatic transmission, fastening between the manual shaft 18 and the aim member 6 can be made with the nut 50 through a simple procedure of removing the lid member 51. Specifically, fastening inside the case 10 can be made in an assembled state of the range change apparatus 1₁ without disassembling the case 10. Processes involved in mounting the range change apparatus 1₁ on the manual shaft 18 can therefore be simplified. In addition, even during transportation of an assembled range change apparatus 1₁ or after fastening (after the range change apparatus 1₁ is mounted on the automatic transmission), mounting of the lid member 51 achieves good sealing performance of the case 10 and also prevents entry of foreign matter.

Additionally, the lid member 51 makes the nut 50 invisible with the vehicle range change apparatus 1₁ mounted on the manual shaft 18, so that it is unknown how the nut 50 achieves fixing. Thus, an antitheft effect can be achieved against an act of, for example, stealing a vehicle by, for example, rotating the manual shaft 18 and disengaging the parking gear. In addition, the lid member 51 and the nut 50 are separate from each other. As compared, for example, with an arrangement in which a nut 60 plugs the insertion hole (see a second embodiment to be described later), it takes time to cancel the fastening of the nut 50, yielding an antitheft effect.

Note that, in the range change apparatus 1₁ according to the first embodiment described heretofore, the insertion hole 10c is plugged by threadedly engaging the lid member 51 into the insertion hole 10c. However, this is not the only possible arrangement. For example, after the range change apparatus 1₁ is mounted on the manual shaft 18 disposed in the automatic transmission, a cap-shaped member formed of, for example, a resin material may be fixed to the insertion hole 10c using, for example, an adhesive.

### Second Embodiment

A second embodiment, which is the first embodiment partly modified, will be described below with reference to FIG. 4. Note that similar members as those of the above-described first embodiment will be identified with the same reference numerals and descriptions therefor will be omitted.

Referring to FIG. 4, a range change apparatus 1₂ according to the second embodiment includes a nut (fastening unit) 60 that is the nut 50 in the first embodiment (see FIG. 3) with a modified shape. The nut 60 is formed from a so-called cap nut with an internal thread 60a opening in one direction only. A cover 10b of a case 10 includes a through hole (fastening enabling unit) 10d. The nut 60 is thereby disposed in an extended condition so as to protrude from the through hole 10d. A substantially axially central portion of the nut 60, in particular, is formed into an outer peripheral cylindrical portion (fastening enabling unit) 60b having a cylindrically formed outer peripheral side. The outer peripheral cylindrical portion 60b is extended up to the through hole 10d in the cover 10b. In addition, a distal end side of the nut 60 relative to the outer peripheral cylindrical portion 60b, specifically, a portion protruding to the outside from the cover 10 includes a six-chamfered-face portion (fastening enabling unit, torque receiving portion) 60c formed thereon that has six chamfered faces and receives rotating torque of, for example, a hexagonal wrench, spanner, or other tool. Further, a seal ring 75 is disposed on a circumference of the through hole 10d between the outer peripheral cylindrical portion 60b and the through hole 10d in the cover 10b. The seal ring 75 seals the nut 60 rotatably, while maintaining a hermetic seal.

Accordingly, in the second embodiment, when the range change apparatus 1₂ is to be mounted on a manual shaft 18 disposed in the automatic transmission, the manual shaft 18 and an arm member 6 can be fastened together by simply tightening the six-chamfered-face portion 60c of the nut 60 with a tool at an outside of the case 10. Specifically, fastening inside the case 10 can be made in an assembled state of the range change apparatus 1₂ without disassembling the case 10. Processes involved in mounting the range change apparatus 1₂ on the manual shaft 18 can therefore be simplified. In addition, even during transportation of an assembled range change apparatus 1₂ or after fastening (after the range change apparatus 1₂ is mounted on the automatic transmission), good sealing performance of the case 10 can be achieved and entry of foreign matter can be prevented.

### Third Embodiment

A third embodiment, which is the first embodiment partly modified, will be described below with reference to FIGS. 5 and 6. Note that similar members as those of the above-described first embodiment will be identified with the same reference numerals and descriptions therefor will be omitted.

Referring to FIGS. 5 and 6, a range change apparatus 1₃ according to the third embodiment represents an improvement on the relationship between the aim member 6 and the range position detection sensor 11 which are away from each other according to the first embodiment (see FIG. 3). Specifically, a rotor 11a of the range position detection sensor 11 includes a protrusion 11c that protrudes toward the side of the arm member 6. As in the above-described manual shaft 18, the protrusion 11c is formed into a two-chamfered-face portion. The arm member 6, on the other hand, includes a through hole 6d having a shape that matches the profile of the protrusion 11c. The protrusion 11c and the through hole 6d thereby each form a fit portion that is mutually fitted together.

The protrusion 11c has an end face 11d that is formed to be flush with a step portion 18c of the manual shaft 18 (the protrusion 11c may be slightly shorter). The rotor 11a is thereby structured not to impede fastening when the arm member 6 and the manual shaft 18 are fastened together by tightening a nut 50.

The arm member 6 and the rotor 11a are fitted together when the range change apparatus 1₃ is assembled. Consequently, when the range change apparatus 1₃ is to be mounted on the manual shaft 18 disposed in the automatic transmission, a through hole 11f in the rotor 11a and a through hole 6b in the arm member 6 are lined up on the same axis without being deviated from each other. The manual shaft 18 can therefore be inserted easily; specifically, mounting processes can be simplified. Further, the rotor 11a is prevented from being turned through 180 degrees during, for example, transportation. Specifically, when the manual shaft 18 is inserted, the rotor 11a can be prevented from being mounted in an inverted position.

### Fourth Embodiment

A range change apparatus 1₄ according to a fourth embodiment is the range change apparatus 1₂ according to the second embodiment including a fit portion between the arm member 6 and the rotor 11a in the same manner as in the third embodiment. This results in the same effect as in the third embodiment being achieved, in addition to those of the range change apparatus 1₂ according to the second embodiment.

### Fifth Embodiment

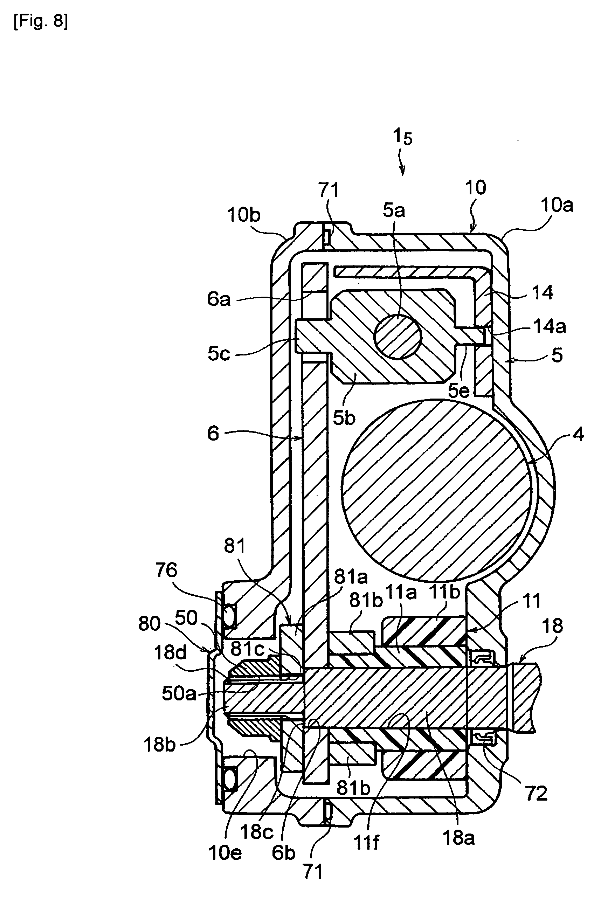

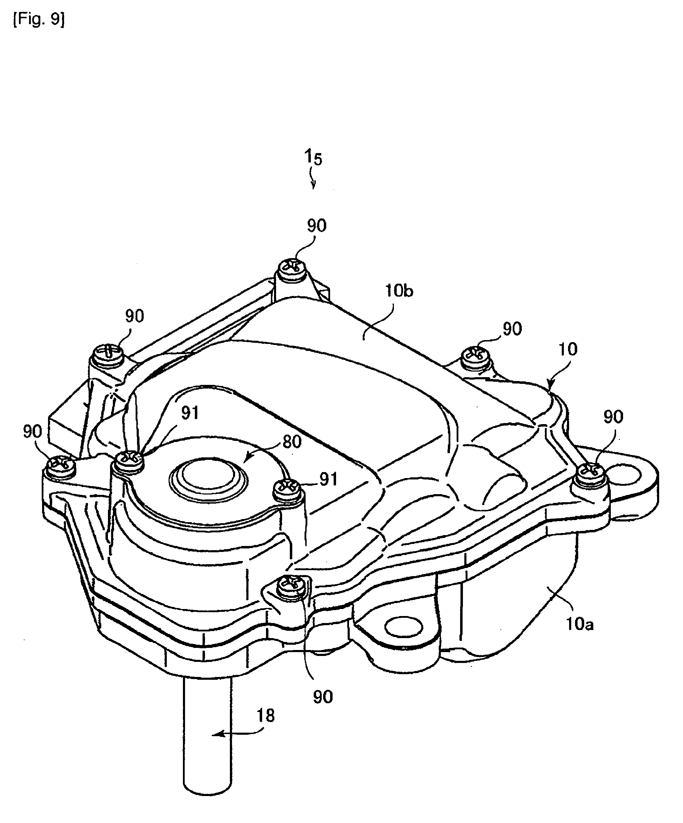

A fifth embodiment, which is the first embodiment partly modified, will be described below with reference to FIGS. 8 and 9. Note that similar members as those of the above-described first embodiment will be identified with the same reference numerals and descriptions therefor will be omitted.

Referring to FIG. 8, in a range change apparatus 1₅ according to the fifth embodiment, the lid member 51 in the first embodiment (see FIG. 3) is changed to a plate cover (covering member, plate-like member) 80. In addition, relative to the first embodiment, the fastening portion between the manual shaft 18, the arm member 6, and the range position detection sensor 11 using the nut 50 is changed. Specifically, in the first embodiment, the arm member 6 is directly fastened to the manual shaft 18 using the nut 50. On the other hand, in this fifth embodiment, the arm member 6 is fastened with the nut 50 to the manual shaft 18 via a washer member 81 and the washer member 81 is connected to a rotor 11a of the range position detection sensor 11.

Specifically, referring to FIG. 8, a through hole 6b formed in the arm member 6 is formed to match the profile of a two-chamfered-face portion 18a of the manual shaft 18 and the two-chamfered-face portion 18a is fitted in the through hole 6b. As a result, the arm member 6 is rotated to rotate the manual shaft 18 as the above-described nut member 5b moves axially along the screw shaft 5a.

The washer member 81, on the other hand, is structured to include a washer portion 81a and two leg portions 81b, 81b. The washer portion 81a includes a through hole 81c formed therein through which a taper portion 18b of the manual shaft 18 penetrates. Specifically, a step portion 18c of the manual shaft 18 abuts on the washer portion 81a and an internal thread 50a of the nut 50 is threadedly tightened with an external thread 18d of the taper portion 18b, so that the washer member 81 is fastened to the manual shaft 18.

In addition, the arm member 6 includes through holes (not shown) through which the leg portions 81b, 81b penetrate. The leg portions 81b, 81b are fitted so as to clamp the rotor 11a of the range position detection sensor 11. This integrally fastens together the manual shaft 18, the rotor 11a of the range position detection sensor 11, the washer member 81, and the nut 50. Note that the arm member 6 is loose-fitted with a gap from the rotor 11a of the range position detection sensor 11 and the washer portion 81a of the washer member 81 relative to the axial direction of the manual shaft 18. The arm member 6 is also relatively unrotatably engaged relative to the direction of rotation of the manual shaft 18 with the through hole 6b fitted with the profile of the two-chamfered-face portion 18a.

Referring to FIGS. 8 and 9, in the range change apparatus 1₅, a cover 10b of a case 10 includes an insertion hole (fastening enabling unit) 10e formed at a position on an extension extended coaxially from the manual shaft 18. A tool for tightening the nut 50 (for example, hexagonal wrench) can be inserted into the insertion hole 10e. The plate cover 80 formed through, for example, pressworking is fixed on the outside (left side in FIG. 8) of the insertion hole 10e in a tight contact condition using screws 91, 91 (see FIG. 9). Note that a plurality of (at six places) screws 90 shown in FIG. 9 fastens a case main body 10a with the cover 10b.

A seal ring 76 is disposed on the outer peripheral side of the insertion hole 10e in the cover 10b of the case 10, sealing between the plate cover 80 and the cover 10b. This achieves good sealing performance of the case 10 without having to process portions of tight contact between the plate cover 80 and the case 10 to close tolerances. Specifically, this enables forming of the plate cover 80 through pressworking, achieving cost reduction.

In accordance with the range change apparatus 1₅ according to the fifth embodiment described above, fastening of the manual shaft 18 with the arm member 6 using the nut 50 can be done inside the case 10 through a simple procedure of removing the plate cover 80 and, after fastening, mounting the plate cover 80 results in good sealing performance of the case 10. Further, the member for covering the insertion hole 10e is formed into a plate shape. This contributes to reduction in size in a thickness direction (right-left direction in FIG. 8) of the range change apparatus 1₅. Moreover, the plate cover 80 can be formed through, for example, pressworking, so that cost reduction can be achieved.

The washer member 81 and the rotor 11a are fitted together by the leg portions 81b, 81b via the arm member 6 when the range change apparatus 1₅ is assembled. Consequently, when the range change apparatus 1₅ is to be mounted on the manual shaft 18 disposed in the automatic transmission, a through hole 11f in the rotor 11a, the through hole 6b in the arm member 6, and the through hole 81c in the washer member 81 are lined up on the same axis without being deviated from each other. The manual shaft 18 can therefore be inserted easily; specifically, mounting processes can be simplified. Further, the rotor 11a is prevented from being turned through 180 degrees during, for example, transportation. Specifically, when the manual shaft 18 is inserted, the rotor 11a can be prevented from being mounted in an inverted position.

Additionally, the plate cover 80 makes the nut 50 invisible with the vehicle range change apparatus 1₅ mounted on the manual shaft 18, so that it is unknown how the nut 50 achieves fixing. Therefore, an antitheft effect can be achieved against an act of, for example, stealing a vehicle by, for example, rotating the manual shaft 18 and disengaging the parking gear. In addition, the plate cover 80 and the nut 50 are separate from each other. As compared, for example, with the arrangement in which the nut 60 plugs the insertion hole (see, for example, the second embodiment), it takes time to cancel the fastening of the nut 50, yielding an antitheft effect.

### Sixth Embodiment

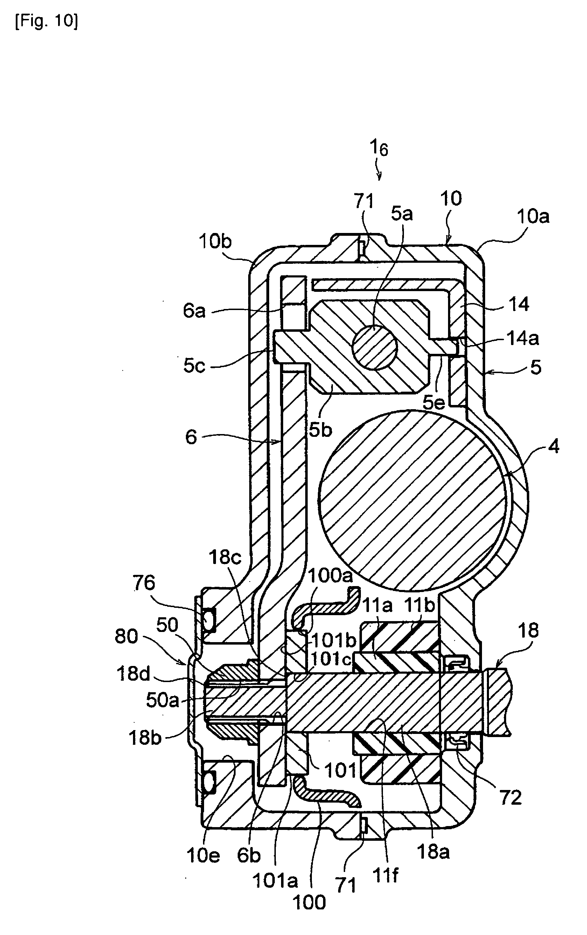

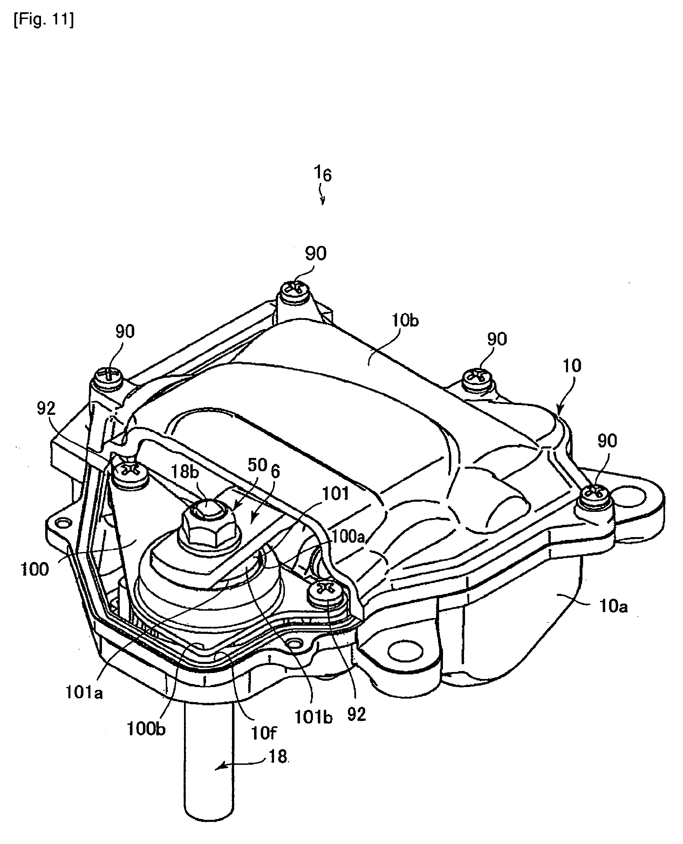

A sixth embodiment, which is the first and fifth embodiments partly modified, will be described below with reference to FIGS. 10 and 11. Note that similar members as those of the above-described first and fifth embodiments will be identified with the same reference numerals and descriptions therefor will be omitted.

Referring to FIG. 10, in a range change apparatus 1₆ according to the sixth embodiment, the lid member 51 in the first embodiment (see FIG. 3) is changed to a plate cover (plate-like member) 80, as in the fifth embodiment. In addition, as compared with the fifth embodiment, the fastening portion between the manual shaft 18 and the aim member 6 using the nut 50 is changed and the manual shaft 18 is supported by a support member 100.

Specifically, referring to FIGS. 10 and 11, the support member 100 is disposed between a case main body 10a and a cover 10b. Referring to FIG. 11, the support member 100 has an end portion 100b clamped between a clamp portion 10f of the case main body 10a and a clamp portion (not shown) of the cover 10b. In addition, the support member 100 is fixed to the case main body 10a using, for example, two screws 92, 92. The support member 100 includes, as shown in FIGS. 10 and 11, a circular support hole 100a formed at a center of a protruded portion thereof.

A disc-like member 101 formed into a disc shape is disposed in the support hole 100a. The disc-like member 101 has an outer peripheral surface 101a formed into a circle and is supported slidably by the support hole 100a. In addition, the disc-like member 101 has a side surface 101b fixed to the arm member 6. Specifically, the support member 100 rotatably supports the arm member 6 via the disc-like member 101.

The arm member 6 includes a through hole 6b formed therein so as to be fitted with a taper portion 18b of the manual shaft 18. In addition, the disc-like member 101 includes a through hole 101c formed therein so as to be fitted with a two-chamfered-face portion 18a. As a result, a step portion 18c of the manual shaft 18 abuts on the arm member 6 and an internal thread 50a of the nut 50 is threadedly tightened with an external thread 18d of the taper portion 18b, so that the arm member 6 and the disc-like member 101 fixed thereto are fastened to the manual shaft 18. Consequently, the manual shaft 18 is fastened to the arm member 6 with the support member 100 rotatably supporting the disc-like member 101 and the arm member 6, so that the support member 100 rotatably supports the manual shaft 18 via the disc-like member 101 and the arm member 6.

Note that an insertion hole 10e of a tool is covered with the plate cover 80 in the same manner as in the fifth embodiment and the description therefor will be omitted.

In accordance with the range change apparatus 1₆ according to the sixth embodiment described above, the support member 100 rotatably supports the manual shaft 18 via the disc-like member 101 and the arm member 6. As a result, even if, for example, the range change apparatus 1₆ receives a force in a tilt direction relative to the manual shaft 18, the support member 100 and the disc-like member 101 can receive that force, so that support accuracy of the arm member 6 in a tilt direction can be improved.

Note that the first through sixth embodiments described heretofore have been described for the arrangement in which the vehicle range change apparatus 1 is mounted in the automatic transmission. Understandably, the arrangement is not limited only this and the range change apparatus may be used, for example, in a hybrid vehicle in which the apparatus is used as a parking mechanism change apparatus without changing hydraulic ranges.

The range change apparatus according to the present invention can be used for changing shift ranges through electric commands in, for example, passenger vehicles, trucks, buses, and agricultural machines. The apparatus is particularly suitable for use in a range change apparatus that is required to be easily mounted on a range change shaft included in the vehicle and to prevent entry of foreign matter.

## Claims

1. A vehicle range change apparatus (1) that comprises:
a motor (4);
a drive mechanism (5, 6, 12), the drive mechanism (5, 6, 12) including:
a conversion mechanism (5) for converting a rotary motion of the motor (4) into linear motion; and
a rotary engagement member (6) for converting the linear motion converted by the conversion mechanism (5) into rocking motion, the drive mechanism (5, 6, 12) for thereby transmitting driving rotation of the motor (4);
a detection unit (11) penetrated by a range change shaft (18) that is rotatably driven by the rotary engagement member (6), the detection unit (11) for detecting a rotation angle of the range change shaft (18); and
a case member (10) for hermetically sealing at least the rotary engagement member (6) and the detection unit (11), the motor (4) being drivingly controlled based on a shift range selected by a range selector device (2) and a detection result of the detection unit (11), the vehicle range change apparatus (1) comprising:
a fastening unit (60) for fastening inside the case member (10) an end portion (18b) of the range change shaft (18) that penetrates through, and protrudes from the detection unit (11) and the rotary engagement member (6);
**characterized by**
a fastening enabling unit (10d, 75) for enabling fastening to be done inside the case member (10) using the fastening unit (60) when the rotary engagement member (6) and the range change shaft (18) are to be fastened together using the fastening unit (50, 60) with the vehicle range change apparatus (1) in an assembled state, wherein
the fastening enabling unit (10d, 75) includes a through hole (10d) formed in the case member (10) and a seal member (75) disposed on a circumference of the through hole (10d); and
the fastening unit (60) includes a nut that includes: an outer peripheral cylindrical portion (60b) threadedly engaging the external thread (18d) formed on the end portion (18b) of the range change shaft (18), extending up to the through hole (10d), and sealed at a portion thereof relative to the through hole (10d) by the seal member (75); and a torque receiving portion (60c) receiving rotating torque from a tool at an outside of the case member (10).

2. The vehicle range change apparatus (1) according to claim 1, **characterized in that**
the detection unit (11) includes: a rotor (11a) fitted to the range change shaft (18) and integrally rotatable therewith; and an angle sensor (11b) for detecting a rotation angle of the rotor (11a), and
the vehicle range change apparatus (1) includes a fit portion (6d, 11c) in which the rotary engagement member (6) of the drive mechanism (5, 6, 12) and the rotor (11a) are unrotatably fitted.

## Patentansprüche

1. Fahrzeugbereichsänderungsgerät (1), das folgendes aufweist:
einen Motor (4);
einen Antriebsmechanismus (5, 6, 12), wobei der Antriebsmechanismus (5, 6, 12) folgendes aufweist:
einen Umwandlungsmechanismus (5) zum Umwandeln einer Drehbewegung des Motors (4) in eine lineare Bewegung; und
ein Dreheingriffsbauteil (6) zum Umwandeln der linearen Bewegung, die durch den Umwandlungsmechanismus (5) umgewandelt worden ist, in eine Kippbewegung, wobei der Antriebsmechanismus (5, 6, 12) dadurch eine Antriebsdrehung des Motors (4) überträgt;
eine Erfassungseinheit (11), durch die hindurch eine Bereichsänderungswelle (18) geht, die durch das Dreheingriffsbauteil (6) drehbar angetrieben wird, wobei die Erfassungseinheit (11) zum Erfassen eines Drehwinkels der Bereichsänderungswelle (18) dient; und
ein Gehäusebauteil (10) zum hermetischen Dichten wenigstens des Dreheingriffsbauteils (6) und der Erfassungseinheit (11), wobei der Motor (4) auf der Basis eines Schaltbereichs, der durch eine Bereichsauswahlvorrichtung (2) ausgewählt ist, und eines Erfassungsergebnisses der Erfassungseinheit (11) antriebsgesteuert wird, wobei das Fahrzeugbereichsänderungsgerät (1) folgendes aufweist:
eine Befestigungseinheit (60) zum Befestigen, im Inneren des Gehäusebauteils (10), eines Endabschnitts (18b) der Bereichsänderungswelle (18), die durch die Erfassungseinheit (11) hindurchgeht und von dieser vorsteht, und des Dreheingriffsbauteils (6);
**gekennzeichnet, durch**
eine Befestigungsermöglichungseinheit (10d, 75) zum Ermöglichen, dass eine Befestigung im Inneren des Gehäusebauteils (10) mit Hilfe der Befestigungseinheit (60) durchgeführt werden kann, wenn das Dreheingriffsbauteil (6) und die Bereichsänderungswelle (18) mit Hilfe der Befestigungseinheit (50, 60) miteinander zu befestigen sind, während das Fahrzeugbereichsänderungsgerät (1) in einem zusammengebauten Zustand ist, wobei
die Befestigungsermöglichungseinheit (10d, 75) ein Durchgangsloch (10d), das in dem Gehäusebauteil (10) ausgebildet ist, und ein Dichtungsbauteil (75) hat, das an einem Umfang des Durchgangslochs (10d) angeordnet ist; und
die Befestigungseinheit (60) eine Mutter hat, die folgendes aufweist: einen äußeren zylindrischen Umfangsabschnitt (60b), der mit dem Außengewinde (18d), das an dem Endabschnitt (18b) der Bereichsänderungswelle (18) ausgebildet ist, im Gewindeeingriff ist, der sich bis zu dem Durchgangsloch (10d) erstreckt, und der an einem Abschnitt von sich in Bezug zu dem Durchgangsloch (10d) **durch** das Dichtungsbauteil (75) gedichtet ist; und einen Momentaufnahmeabschnitt (60c), der ein Drehmoment von einem Werkzeug an einer Außenseite des Gehäusebauteils (10) aufnimmt.

2. Fahrzeugbereichsänderungsgerät (1) nach Anspruch 1, **dadurch gekennzeichnet, dass**
die Erfassungseinheit (11) einen Rotor (11a), der an der Bereichsänderungswelle (18) befestigt ist und einstückig mit diesem drehen kann; und einen Winkelsensor (11b) zum Erfassen eines Drehwinkels des Rotors (11a) hat, und
das Fahrzeugbereichsänderungsgerät (1) einen Passabschnitt (6d, 11c) hat, in dem das Dreheingriffsbauteil (6) des Antriebsmechanismus (5, 6, 12) und der Rotor (11a) undrehbar gepasst sind.

## Revendications

1. Appareil (1) de changement de gamme de véhicule qui comprend :
un moteur (4) ;
un mécanisme (5, 6, 12) d'entraînement, le mécanisme (5, 6, 12) d'entraînement comportant :
un mécanisme (5) de conversion permettant de convertir un mouvement rotatif du moteur (4) en un mouvement linéaire ; et
un élément (6) de prise en rotation permettant de convertir le mouvement linéaire converti par le mécanisme (5) de conversion en un mouvement de balancement, le mécanisme (5, 6, 12) d'entraînement permettant de transmettre ainsi la rotation d'entraînement du moteur (4)
une unité (11) de détection traversée par un arbre (18) de changement de gamme qui est entraîné en rotation par l'élément (6) de prise en rotation, l'unité (11) de détection permettant de détecter un angle de rotation de l'arbre (18) de changement de gamme ; et
un boîtier (10) permettant de faire sceller hermétiquement au moins l'élément (6) de prise en rotation et l'unité (11) de détection, le moteur (4) étant commandé à entraînement sur la base d'une gamme de décalage sélectionnée par un dispositif (2) de sélection de gamme et sur un résultat de détection de l'unité (11) de détection, l'appareil (1) de changement de gamme de véhicule comprenant :
une unité (60) de fixation permettant de fixer à l'intérieur du boîtier (10) une partie (18b) d'extrémité de l'arbre (18) de changement de gamme qui pénètre à travers, et avance à partir de l'unité (11) de détection et de l'élément (6) de prise en rotation ;
**caractérisé par**
une unité (10d, 75) de déclenchement de fixation permettant de faire la fixation à l'intérieur du boîtier (10) en utilisant l'unité (60) de fixation lorsque l'élément (6) de prise en rotation et l'arbre (18) de changement de gamme sont attachés en utilisant l'unité de fixation (50, 60) de l'appareil (1) de changement de gamme de véhicule dans un état monté, dans lequel
l'unité (10d, 75) de déclenchement de fixation comprend un trou (10d) débouchant formé dans le boîtier (10) et un élément (75) de joint d'étanchéité disposé sur une circonférence du trou (10d) débouchant ; et
l'unité (60) de fixation comprend un écrou qui comporte : une partie (60b) cylindrique périphérique extérieure s'engageant par un vissage de filetage (18d) extérieur formé sur la partie d'extrémité (18b) de l'arbre (18) de changement de gamme, s'étendant jusqu'au trou (10d) débouchant, et scellée à une partie de celui-ci relative au trou (10d) débouchant par l'élément (75) de joint d'étanchéité, et une partie (60c) de réception de couple permettant de recevoir le couple de rotation d'un outil à l'extérieur du boîtier (10).

2. Appareil (1) de changement de gamme de véhicule selon la revendication 1, **caractérisé en ce que**
l'unité (11) de détection comporte : un rotor (11a) monté sur l'arbre (18) de changement de gamme et pouvant tourner intégralement avec celui-ci; et un capteur (11b) d'angle permettant de détecter un angle de rotation du rotor (11a), et
l'appareil (1) de changement de gamme de véhicule comporte une partie (6d, 11c) ajustable dans laquelle l'élément (6) de prise en rotation du mécanisme (5, 6, 12) d'entraînement et le rotor (11a) sont montés de manière non rotative.
